# EUROPÄISCHE PATENTSCHRIFT

(11) **EP 2 521 864 B1**
(45) Veröffentlichungstag und Bekanntmachung des Hinweises auf die Patenterteilung: **14.10.2015**
(21) Anmeldenummer: 10800939.0
(22) Anmeldetag: 27.12.2010
(51) Int. Cl.: F16B 25/10

(54) **GEWINDEFORMENDE SCHRAUBE UND IHRE VERWENDUNG**
THREAD-FORMING SCREW AND USE THEREOF
VIS AUTO-TARAUDANTE ET SON UTILISATION

(30) Priorität: 06.01.2010 DE 102010000702
(43) Veröffentlichungstag der Anmeldung: 14.11.2012
(73) Patentinhaber: Arnold Umformtechnik GmbH & Co. KG, 74670 Forchtenberg-Ernsbach (DE)
(72) Erfinder: WERTHWEIN, Bernd, 74670 Sindringen (DE)
(74) Vertreter: Patentanwälte Ruff, Wilhelm, Beier, Dauster & Partner mbB
(86) Internationale Anmeldenummer: PCT/EP2010/070748
(87) Internationale Veröffentlichungsnummer: WO 2011/083060

(56) Entgegenhaltungen:
- EP-A1- 1 262 669
- DE-A1-102008 033 509
- JP-A- 3 066 910
- US-A- 5 044 855

## Beschreibung

Die Erfindung geht aus von einer gewindeformenden Schraube.

Blechkomponenten, die lösbar miteinander verbunden werden sollen, werden in der Regel durch Blechschrauben oder modifizierte Gewindeelemente verschraubt. In der Regel erfordert die Verschraubung eine Vorlochung des Bauteils sowie des zu klemmenden Teils. Die Vorlochung in dem Bauteil kann durch Bohren, Stanzen, Tiefziehen oder dergleichen erfolgen. Die Gewinde werden entweder schon vorgeformt beziehungsweise vorgeschnitten, oder aber durch die Schraube selbst beim Eindrehen geformt.

Es ist bereits eine loch- und gewindeformende Schraube bekannt, die einen Schraubenschaft mit einem Gewindeabschnitt und einem sich daran anschließenden gewindefreien Teil enthält. Der gewindefreie Teil des Schraubenschafts weist in dem sich an das Gewinde anschließenden Teil zunächst Zylinderform auf, verringert sich also im Durchmesser nicht. Dieser zylindrische Teil soll eine der vierfachen Blechdicke entsprechende Länge aufweisen. Die Schraubenspitze ist ballig ausgebildet (DE 3909725).

Ebenfalls bekannt ist eine Gewinde erzeugende Schraube mit einem zylindrischen Gewindeabschnitt und einer kegelförmigen Spitze, die in einer wirklichen Spitze endet. Im Bereich der Schraubenspitze ist ein Gewindegang vorhanden (DE 10 2006 058 464).

Es ist bereits eine gewindeformende Schraube mit einem kegelstumpfförmigen vorderen Schraubenende bekannt, das zunächst **gewindefrei ist, wobei das Gewinde am Ende des kegelstumpfförmiger Absatzes beginnt (**JP 3-66910 A**,** US 5,044,855**).**

**Weiterhin bekannt ist eine Schraube mit einem trilobularen Querschnitt, mit einem Gewindeabschnitt und einem sich an den Gewindeabschnitt anschließenden bis zu einer vorderen leicht abgerundeten Schraubenspitze reichenden gewindefreien Abschnitt (**DE 10 2008 033 509 A1**).**

Der Erfindung liegt die Aufgabe zu Grunde, eine gewindeformende Schraube im Hinblick auf verbesserte Eigenschaften weiterzuentwickeln.

Zur Lösung dieser Aufgabe schlägt die Erfindung eine Schraube mit den im Anspruch 1 genannten Merkmalen und eine Verwendung dieser Schraube vor. Weiterbildungen der Erfindung sind Gegenstand von Unteransprüchen.

Im Gegensatz zum Stand der Technik nimmt der gewindefreie Abschnitt direkt am Ende des Gewindes schon in seinem Durchmesser ab. Dieser mindestens teilweise gewindefreie in seinem Durchmesser abnehmende Bereich dient dazu, einen Durchzug in dem Loch zu formen, der dazu dient, ein besseres Halten des Gewindes in dem Material zu ermöglichen. Dieser Abschnitt wird daher Formabschnitt genannt.

In Weiterbildung der Erfindung kann vorgesehen sein, dass die Gewindekante des Schraubenschafts in einer Projektion senkrecht zu einer Ebene der Längsachse der Schraube von einer Kreisform abweichend ein Polygon, insbesondere ein Dreieck mit abgerundeten Ecken und konvexen Seiten bildet, also eine Form, die auch als polylobular bezeichnet wird.

Insbesondere wird vorgeschlagen, dass auch der Kernquerschnitt des Gewindeabschnitts der Schraube eine solche Form aufweist.

In Weiterbildung der Erfindung ist vorgesehen, dass der Gewindeabschnitt des Schraubenschafts einen ersten sich an den Formabschnitt anschließenden Furchabschnitt und einen sich daran anschließenden zweiten bis zu dem Schraubenkopf reichenden Halteabschnitt aufweist. Es ist dabei vorgesehen, dass der Querschnitt durch den Schraubenschaft in dem Halteabschnitt weniger stark polygonförmig ausgebildet ist als in dem Furchabschnitt. Insbesondere kann der Halteabschnitt einen kreisförmigen Querschnitt aufweisen. Damit wird berücksichtigt, dass der Furchabschnitt in erster Linie dazu da ist, in dem gebildeten Durchzug ein Gewinde zu formen, ohne dass der Einschraubwiderstand zu groß wird. In dem Halteabschnitt, der unmittelbar unterhalb des Schraubenkopfs vorhanden ist, soll aber die eigentliche Festlegung des zu verschraubenden Gegenstands erfolgen.

In nochmaliger Weiterbildung der Erfindung kann vorgesehen sein, dass der Querschnitt des gewindefreien Schaftabschnitts der Schraube die Form eines Polygons, insbesondere eines Dreiecks, mit abgerundeten Ecken und konvexen Seiten aufweist.

In bevorzugter Ausführungsform weist die Schraube also über ihre gesamte Länge gegebenenfalls mit Ausnahme des Halteabschnitts einen solchen polylobularen Querschnitt auf.

Der Außendurchmesser des Gewindeabschnitts kann unmittelbar vor dem Formabschnitt abnehmend ausgebildet sein.

Die Seitenlinie des Formabschnitts kann mindestens teilweise geradlinig verlaufen, so dass der Formabschnitt kegelförmig ausgebildet ist.

Es ist aber ebenfalls möglich, dass die Seitenlinie des Formabschnitts gekrümmt verläuft, wobei es sich dabei um eine konstante Krümmung oder auch um zwei Abschnitte mit unterschiedlicher aber konstanter Krümmung handeln kann.

Der Formabschnitt kann insgesamt gewindefrei sein oder aber teilweise gewindefrei. Beispielsweise kann vorgesehen sein, dass der Formabschnitt von der Spitze aus zunächst glatt bleibt, dass aber schon vor dem Erreichen des Furchabschnitts in dem Formabschnitt ein Gewinde vorhanden ist, dessen Gewindehöhe allmählich zunimmt.

Als besonders sinnvoll hat es sich herausgestellt, wenn es sich bei dem Gewinde um ein Rundgewinde handelt.

Der unmittelbar unterhalb des Schraubenkopfs beginnende Halteabschnitt, der vorzugsweise einen kreisrunden Querschnitt aufweisen kann, ist zusätzlich noch leicht konisch ausgebildet, wobei der Durchmesser in Richtung auf den Schraubenkopf zunimmt. Die Konizität kann im Bereich von etwa 1° bis etwa 10° liegen.

Die von der Erfindung vorgeschlagene Schraube kann nicht nur bei Blechen Anwendung finden, sondern auch bei Faserverbundstoffen und Kunststoffen und bei der Befestigung von Gegenständen aus Materialkombinationen.

Die Erfindung schlägt ebenfalls die Verwendung einer Schraube mit den hierin beschriebenen Merkmalen zur Verbindung von vorgelochten Bauteilen vor. Insbesondere kann die Schraube bei vorgelochten Bauteilen verwendet werden, bei denen die Lochgröße kleiner ist als der Kerndurchmesser der Schraube. Der polygonale Querschnitt des Formabschnitts führt dazu, dass hier ein Durchzug erzeugt werden kann. Der Durchzug dient zur Verbesserung der Haltekraft der Schraube.

Aus diesem Grunde eignet sich die Schraube insbesondere zur Verwendung bei sehr dünnen Blechen. Das Material der Bleche, nicht nur bei sehr dünnen Blechen, kann Stahlblech, Leichtmetall und NE Metalle sein.

Die Bohrungen können gestanzt, gebohrt, gegossen oder mithilfe eines Lasers hergestellt sein. Auch wassergestrahlte oder tief gezogene Löcher sind für die Verwendung der Schraube geeignet.

Die Verwendung der Schraube führt dazu, dass ein leichtes Ansetzen mit geringem axialen Anpressdruck möglich ist, dass konstant niedrige Einschraub- und Furchmomente auftreten und dass dennoch die Überdrehsicherheit und die Verbesserung der Auszugskraft gesteigert werden können.

Dies gilt insbesondere, weil der Halteabschnitt konisch ausgeführt wird, wobei der Kerndurchmesser des Gewindeschafts zum Kopf hin zunimmt. Hier sind Konizitäten im Bereich von 1° bis etwa 10° sinnvoll.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht der von der Erfindung vorgeschlagenen Schraube;
- Figur 2: einen Querschnitt durch die Schraube;
- Figur 3: in vergrößertem Maßstab einen Axialschnitt;
- Figur 4: eine Seitenansicht einer Schraube nach einer zweiten Ausführungsform;
- Figur 5: die Seitenansicht eines mit einem Kopf versehenen Drahtstifts;
- Figur 6: einen Querschnitt durch den Drahtstift längs Linie VI-VI;
- Figur 7: einen Querschnitt durch den Drahtstift längs Linie VII-VII;
- Figur 8: eine Seitenansicht einer Schraube nach einer weiteren Ausführungsform;
- Figur 9: den vorderen Bereich einer Schraube nach einer nochmals weiteren Ausführungsform;
- Figur 10: eine eingeschraubte Schraube;
- Figur 11: eine Seitenansicht einer Schraube nach einer weiteren Ausführungsform;
- Figur 12: eine Einzelheit des Gewindes der Schraube der Figur 11.

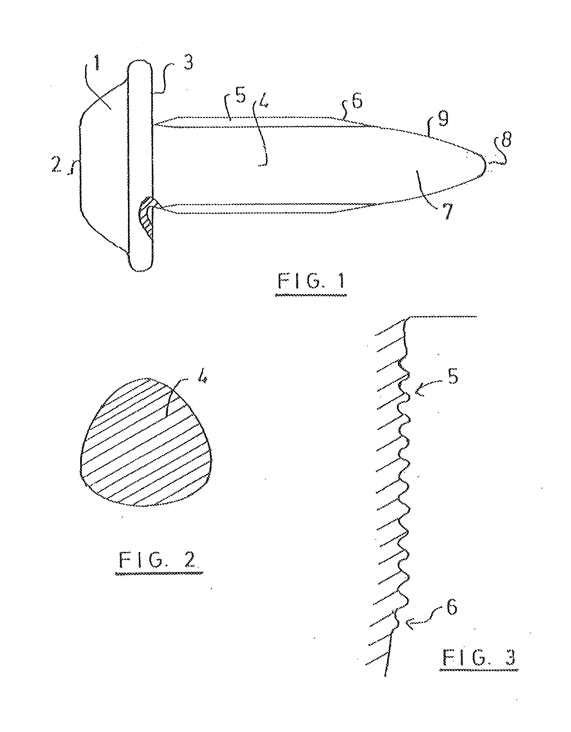

Die in Figur 1 dargestellte Schraube enthält einen Schraubenkopf 1, der in seiner Stirnfläche 2 eine Vertiefung aufweist, die zum Antrieb der Schraube dient. Es wäre auch möglich, dass als Schraubenantrieb ein Vorsprung vorgesehen ist.

Von der in einer Ebene liegenden Unterseite 3 des Schraubenkopfs 1 aus erstreckt sich mittig ein Schraubenschaft 4, der von dem Schraubenkopf 1 ausgehend zunächst zylindrisch ausgebildet ist und ein Gewinde 5 aufweist. Das Gewinde läuft dann in einem relativ kurzen Abschnitt 6 aus. Bei diesem Abschnitt handelt es sich um die so genannte Furchzone. An diesen mit dem Gewinde 5 versehenen Abschnitt schließt sich dann der gewindefreie Formabschnitt 7 an, der in einer abgerundeten Spitze 8 ausläuft. Die in Figur 1 zu sehende Außenkontur 9 des gewindefreien Abschnitts 7 verläuft durchgängig gekrümmt, und zwar in einer konstanten Krümmung. Insgesamt bildet der gewindefreie Formabschnitt 7 ein abgerundetes vorderes Schraubenende 8.

Die Figur 2 zeigt einen Querschnitt durch den Schraubenschaft. Dabei ist aus Gründen der Vereinfachung der Verlauf des Außendurchmessers des Gewindes in eine Ebene verlegt worden. Man sieht also, dass der Querschnitt durch den Schraubenschaft von einem Dreieck mit abgerundeten Ecken und konvex gekrümmten Seiten gebildet wird. Eine solche Form wird auch als trilobulare Form bezeichnet.

Diese Querschnittsform ist in der Schraube sowohl beim Kern des Gewindeabschnitts, als auch beim Außendurchmesser des Gewindes 5 als auch in dem gewindefreien Formabschnitt 7 vorhanden.

Die Figur 3 zeigt in vergrößertem Maßstab einen Teilschnitt durch den Gewindeabschnitt des Schafts 4 der Schraube. Es ist hier zu sehen, dass das Gewinde 5 ein Rundgewinde ist, bei dem die Gewindegänge sowohl an den Vorsprüngen als auch an den Vertiefungen abgerundet verlaufen.

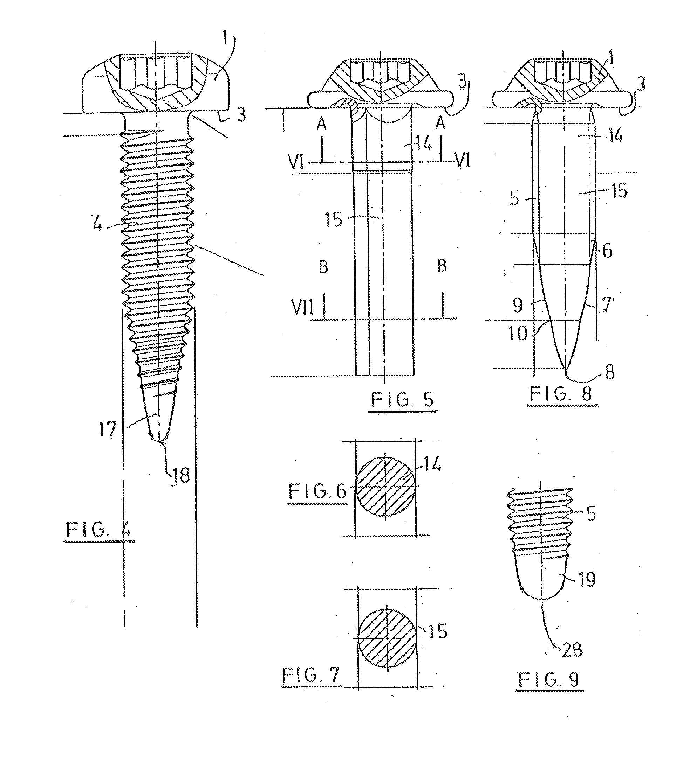

Während die Figur 1 eine Schraube zeigt, bei der der vordere Formabschnitt 7 vollständig gewindefrei bleibt, zeigt die Figur 4 eine Seitenansicht einer Schraube, bei der der vordere Formabschnitt 17 von einer abgerundeten Spitze 18 ausgehend zwar zunächst gewindefrei bleibt, woran sich dann aber ein Abschnitt anschließt, in dem ein Gewinde sich allmählich ausbildet, bis es dann in den Schaftabschnitt 4 mit dem vollständig ausgebildeten Gewinde übergeht.

Im folgenden wird nun auf die Figur 5 eingegangen, die einen Rohling zeigt, aus dem die dargestellten Schrauben hergestellt werden. Während man bei den Seitenansichten die unterschiedlichen Querschnittsformen nicht unbedingt erkennen kann, ist dies bei der Darstellung des Ausgangsprodukts besser möglich. Als Ausgangsprodukt für die Herstellung einer Schraube dient ein Draht, bei dem zunächst einen Schraubenkopf 1 angeformt wird. Dieser Schraubenkopf 1 ist in Figur 5 teilweise im Schnitt dargestellt, so dass man die im Kopf 1 vorhandenen Antriebsausbildung in Form einer Vertiefung ebenfalls sehen kann. Unmittelbar unterhalb der Unterseite des Schraubenkopfs 1 weist der Draht einen im Durchmesser etwas größeren Querschnitt auf. Die Länge dieses Abschnitts 14 entspricht etwa dem Durchmesser. An diesen ersten Abschnitt 14 schließt sich dann der restliche Teil des Drahtes an, in dem der Durchmesser etwas kleiner ist als im oberen Bereich. Aus den Figuren 6 und 7 kann man sehen, dass in diesem Stadium der Herstellung der Schraube auch die Querschnittsform der beiden durch eine Stufe getrennten Abschnitte unterschiedlich ist. In dem sich unmittelbar an den Schraubenkopf anschließenden Bereich 14 ist der Querschnitt beispielsweise vollständig kreisrund, während er in dem anderen Abschnitt eine bereits erwähnte polygonale Form aufweist. Diese beiden unterschiedlichen Querschnittsformen und auch Querschnittsgrößen bleiben nach dem Aufwalzen des Gewindes erhalten. Dadurch weist die in Figur 8 nochmals dargestellte Schraube einen sich an den Schraubenkopf anschließenden Halteabschnitt 14 auf, an den sich dann der Furchabschnitt 15 anschließt, in dem der Querschnitt die polygonale Form aufweist. Diese polygonale Form setzt sich auch über den Formabschnitt 7 bis zu dem vorderen Schraubenende 8 fort. Bei der Ausführungsform der Figur 8 weist der Formabschnitt 7 zwei Abschnitte auf, in denen die Seitenlinie 9 gekrümmt verläuft, und zwar in beiden Abschnitten mit einer unterschiedlichen Krümmung, so dass dadurch eine Art Einbuchtung 10 gebildet wird.

Bei der in Figur 9 nur im vorderen Bereich dargestellten Ausführungsform der von der Erfindung vorgeschlagenen Schraube ist das vordere Schraubenende 28 fast halbkugelförmig mit einem relativ großen Krümmungsradius abgerundet. Erst beim Übergang zu dem zylindrischen Gewindeabschnitt 4 ist das Schaftgewinde 5 vorhanden. Sobald die Schraube in das vorhandene Loch eingedrungen ist, dient der gewindefreie Teil dazu, das Loch in einen Durchzug umzuformen. In diesem Durchzug wird dann das Gewinde durch den Furchabschnitt gebildet. Eine solche Schraube dient insbesondere zur Verbindung von Blechteilen, bei denen auf der Innenseite möglicherweise ein Kontakt mit Kabeln oder sonstigen Gegenständen vorkommen kann.

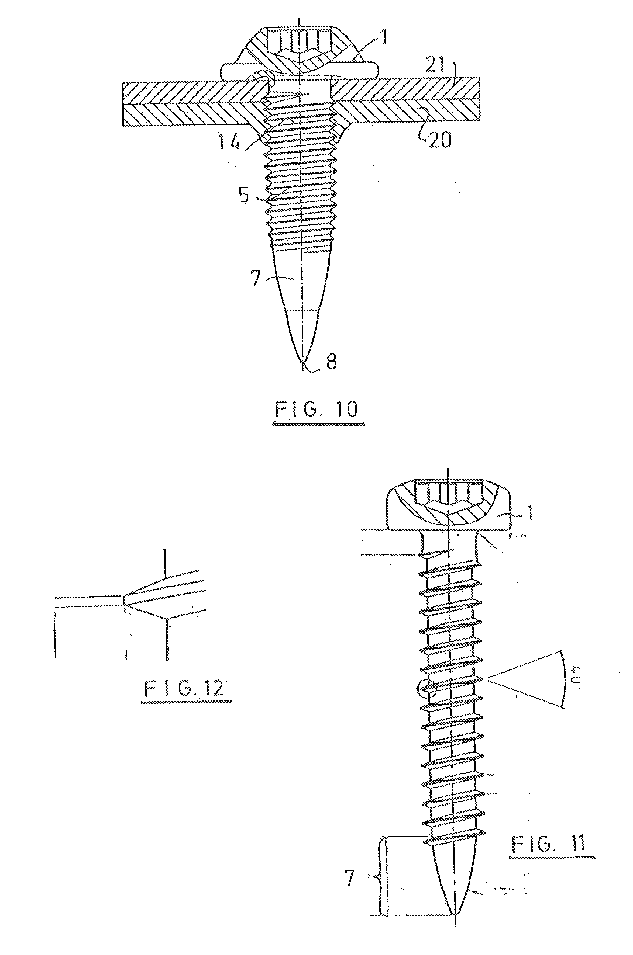

Die Figur 11 zeigt eine Seitenansicht einer weiteren Ausführungsform der Schraube, wobei die Schraube ein so genanntes Kunststoffgewinde aufweist. Zwischen den einzelnen Schraubenwindungen ist ein Abstand vorhanden. Der Spitzenwinkel des Gewindes, rechts in Figur 11 angedeutet, beträgt etwa 40°. Das Gewinde ist symmetrisch. Es bildet keine scharfe Gewindekante, sondern eine Abflachung, was links in Figur 12 zu sehen ist.

Benutzung der beschriebenen Schraube:

Die Art der Verbindung der hier vorgeschlagenen Schraube kann am besten unter Bezugnahme auf Figur 10 erläutert werden. Als Beispiel wird dabei die Schraube der Figur 8 verwendet. Die Schraube mit dem vorderen Formabschnitt 7, der im Querschnitt dreieckförmig mit abgerundeten Ecken und Seiten ausgebildet ist, wird mit diesem Formabschnitt in die Löcher der zu verbindenden Bauteile eingesteckt und mithilfe eines Schraubers oder dergleichen mit hoher Drehzahl drehangetrieben. Der angenäherte Dreiecksquerschnitt mit den abgerundeten Ecken sorgt nach dem Eindringen des vorderen Schraubenendes, das sich zu diesem Zeitpunkt noch immer sehr schnell dreht und angedrückt wird, für eine nur punktuelle Reibauflage am Umfang. Damit wird eine Verschweißung zwischen der Schraube und dem Bauteil vermieden.

Wenn der Formabschnitt nahezu vollständig in das Bauteil eingedrungen ist und einen Durchzug erzeugt hat, verringert sich aufgrund des zunehmenden Widerstands die Drehzahl auf die übliche Schraubgeschwindigkeit. Gleichzeitig wird der Anpressdruck verringert. Nun greift der erste Gewindegang des Gewindes 5 in das Bauteil ein, so dass ein Zwangsvorschub entsteht. Damit beginnt der Vorgang des Formens des Gewindes.

Der Querschnitt des Schraubenschafts innerhalb des Gewindeabschnitts weist ebenfalls das erwähnte Dreiecksprofil mit abgerundeten Ecken auf. Dieses Profil hat ebenfalls den Vorteil, dass durch die nicht längs eines gesamten Umfangs, sondern nur punktuelle auftretende Reibauflage eine niedrigere Reibung und somit ein geringeres Einschraubdrehmoment entsteht. Gleichzeitig weist der Bauteilwerkstoff in der auf diese Weise geformten Gewindebohrung die Neigung auf, nach innen zurückzufedern. Dadurch wird eine Art gewollte Selbsthemmung erzeugt, die dazu führt, dass die Schraubverbindung gegen ein ungewolltes Lösen gesichert wird.

Das Ergebnis kann der Figur 10 entnommen werden. Hier ist zu erkennen, dass in dem zweiten Blech 20, an dem das erste Blech 21 befestigt werden soll, ein Durchzug gebildet wurde, der eine in axialer Richtung längere Wand bildet, in der das Gewinde der Schraube eingreift. Dieser Teil des Schraubenschafts entspricht dem unter Bezugnahme auf die Figur 5 erläuterten Halteabschnitt 14.

Vergleicht man die Ausführungsformen beispielsweise der Figur 4 und der Figur 9 miteinander, so kann man erkennen, dass die Art der Abrundung im vorderen Bereich der Schraube unterschiedlich stark ist. Man kann daraus auch ersehen, dass beispielsweise eine Schraube der Ausführungsform der Figur 4 bei einer Lochgröße Anwendung finden kann, die im Verhältnis zum Kerndurchmesser des Schraubenschafts deutlich kleiner ist. Dagegen ist eine Schraube der Ausführungsform nach Figur 9 für ein Loch geeignet, das fast so groß ist wie der Kerndurchmesser des Schraubenschafts.

Bei dem Schaftgewinde kann es sich nicht nur um ein Rundgewinde handeln, wie es dargestellt wurde, sondern auch um ein metrisches Gewinde oder je nach Anwendungsfall auch um ein Blechgewinde beziehungsweise ein selbstschneidendes Gewinde. Das Gewinde kann auch als asymmetrisches Gewinde ausgebildet sein, und auch als Grobgewinde.

Zur Vergrößerung des Vorschubs kann das Gewinde auch als doppelgängiges Gewinde ausgebildet sein.

## Patentansprüche

1. Loch- und gewindeformende Schraube, mit
1.1 einem Schraubenkopf (1), der
1.2 eine Schraubenantriebsausbildung aufweist,
1.3 einem Schraubenschaft (4), der
1.4 einen zylindrischen Gewindeabschnitt mit
1.41 einem von dem Schraubenkopf ausgehenden Halteabschnitt (14)
und
1.42 einem sich daran anschließenden Furchabschnitt (15), und
1.5 einen bis zu einem vorderen Schraubenende (8) reichenden teilweise gewindefreien Formabschnitt (7) aufweist,
1.6 dessen Querschnitt in Richtung auf das vordere Schraubenende (8) kontinuierlich abnimmt, wobei
1.7 der Kernquerschnitt des Gewindeabschnitts des Schraubenschafts (4) mindestens innerhalb des Furchabschnitts (15) die Form eines Polygons, insbesondere eines Dreiecks, mit abgerundeten Ecken und konvexen Seiten aufweist, wobei **1.8 das vordere Schraubenende (8) abgerundet ausgebildet ist,**
**1.9 der Querschnitt des Schraubenschafts in dem Halteabschnitt (14) weniger stark polygonförmig als in dem Furchabschnitt (15) ausgebildet ist, ggf. auch kreisförmig und**
**1.10 der Halteabschnitt (14) leicht konisch ausgebildet ist.**

2. Schraube nach Anspruch 1, bei der der Querschnitt des Formabschnitts (7) die Form eines Polygons, insbesondere eines Dreiecks, mit abgerundeten Ecken und konvexen Seiten aufweist.

3. Schraube nach einem der vorhergehenden Ansprüche, bei der der Außendurchmesser des Gewindes (5) im Übergang von dem Gewindeabschnitt zu dem Formabschnitt (7) abnimmt.

4. Schraube nach einem der vorhergehenden Ansprüche, bei dem die Seitenlinie (9) des Formabschnitts (17) mindestens teilweise geradlinig und/oder gekrümmt verläuft.

5. Schraube nach einem der vorhergehenden Ansprüche, bei der der Formabschnitt (7) von dem vorderen Schraubenende (18) ausgehend gewindefrei ist und vor dem Gewindeabschnitt ein Gewinde mit zunehmender Gewindehöhe aufweist.

6. Schraube nach einem der vorhergehenden Ansprüche, bei der der Schaft der Schraube im Halteabschnitt (14) leicht konisch ausgebildet ist.

7. Verwendung einer Schraube nach einem der vorhergehenden Ansprüche zur Dünnblechverschraubung vorgelochter Bauteile.

8. Verwendung einer Schraube nach einem der Ansprüche 1 bis 6 bei Kunststoffen und/oder bei Faserverbundstoffen.

9. Verwendung nach Anspruch 7 oder 8, bei der der Durchmesser des Lochs der zu verschraubenden Bauteile kleiner ist als der Kerndurchmesser des Gewindeschafts.

## Claims

1. A hole-forming and thread-forming screw, having
1.1 a screw head (1), which
1.2 exhibits a screw driving arrangement,
1.3 a screw shank (4), which
1.4 exhibits a cylindrical section of thread having
1.41 a retaining section (14) starting from the head of the screw and
1.42 an adjoining tapping section (15), and
1.5 a partially thread-free forming section (7) extending as far as a front end (8) of the screw,
1.6 of which the cross section reduces continuously in the direction of the front end (8) of the screw, whereby
1.7 the core cross section of the threaded section of the shank (4) of the screw exhibits, at least within the tapping section (15), the form of a polygon, especially a triangle, having rounded corners and convex sides, wherein
1.8 the front end (8) of the screw is rounded,
1.9 the cross section of the shank of the screw in the retaining section (14) is configured with a less distinctly polygonal form than in the tapping section (15) and, if necessary, also with a circular form, and
1.10 the retaining section (14) is of slightly conical configuration.

2. The screw according to claim 1, wherein the cross section of the forming section (7) exhibits the form of a polygon, especially a triangle, having rounded corners and convex sides.

3. The screw according to any one of the preceding claims, wherein the external diameter of the thread (5) decreases in the transition from the threaded section to the forming section (7).

4. The screw according to any one of the preceding claims, wherein the lateral line (9) of the forming section (17) at least partially runs in a straight line and/or in a curved line.

5. The screw according to any one of the preceding claims, wherein the forming section (7) is free of threads, starting from the front end (18) of the screw, and exhibits a thread with an increasing thread height ahead of the threaded section.

6. The screw according to any one of the preceding claims, wherein the shank of the screw in the retaining section (14) is of slightly conical configuration.

7. The use of a screw according to any one of the preceding claims for the thin sheet screwing of pre-pierced components.

8. The use of a screw according to any one of claims 1 to 6 in synthetic materials and/or fiber composite materials.

9. The use according to claims 7 or 8, wherein the diameter of the hole in the components to be screwed together is smaller than the core diameter of the shank of the screw.

## Revendications

1. Vis auto-trouante et auto-taraudeuse, avec
1.1 une tête de vis (1), qui présente
1.2 une empreinte d'entraînement de vis,
1.3 une tige de vis (4), qui présente
1.4 une partie filetée cylindrique avec
1.41 une partie de maintien (14) partant de la tête de vis, et
1.42 une partie de taille (15) qui s'y raccorde, et
1.5 une partie de forme (7) partiellement sans filet s'étendant jusqu'à l'extrémité antérieure (8) de la vis,
1.6 dont la section transversale diminue de façon continue en direction de l'extrémité antérieure (8) de la vis, dans laquelle
1.7 la section transversale du noyau de la partie filetée de la tige de vis (4) présente au moins à l'intérieur de la partie de taille (15) la forme d'un polygone, en particulier d'un triangle, avec des angles arrondis et des côtés convexes,
1.8 dans laquelle l'extrémité antérieure (8) de la vis est de forme arrondie,
1.9 la section transversale de la tige de vis dans la partie de maintien (14) est nettement moins polygonale que dans la partie de taille (15), elle est éventuellement aussi circulaire et
1.10 la partie de maintien (14) est de forme légèrement conique.

2. Vis selon la revendication 1, dans laquelle la section transversale de la partie de forme (7) présente la forme d'un polygone, en particulier d'un triangle, avec des angles arrondis et des côtés convexes.

3. Vis selon l'une quelconque des revendications précédentes, dans laquelle le diamètre extérieur du filet (5) diminue dans la transition de la partie filetée à la partie de forme (7).

4. Vis selon l'une quelconque des revendications précédentes, dans laquelle le profil (9) de la partie de forme (17) est au moins partiellement rectiligne et/ou courbe.

5. Vis selon l'une quelconque des revendications précédentes, dans laquelle la partie de forme (7) est exempte de filet à partir de l'extrémité antérieure (18) de la vis et présente un filet de hauteur de filet croissante avant la partie filetée.

6. Vis selon l'une quelconque des revendications précédentes, dans laquelle la tige de vis est de forme légèrement conique dans la partie de maintien (14).

7. Utilisation d'une vis selon l'une quelconque des revendications précédentes, pour l'assemblage par vissage de tôles minces de composants pré-perforés.

8. Utilisation d'une vis selon l'une quelconque des revendications 1 à 6, avec des matières plastiques et/ou des matériaux composites renforcés par des fibres.

9. Utilisation selon la revendication 7 ou 8, dans laquelle le diamètre du trou des composants à assembler par vissage est plus petit que le diamètre du noyau de la tige de vis.
